(19) Europäisches Patentamt
European Patent Office
Office européen des brevets

(11) **EP 1 191 310 B1**

(12) **EUROPÄISCHE PATENTSCHRIFT**

(45) Veröffentlichungstag und Bekanntmachung des Hinweises auf die Patenterteilung:
**04.05.2016 Patentblatt 2016/18**

(51) Int Cl.:
***G01F 1/115*** *(2006.01)* ***G01F 1/075*** *(2006.01)*
***G01F 1/08*** *(2006.01)* ***G01F 1/12*** *(2006.01)*

(21) Anmeldenummer: **01101778.7**

(22) Anmeldetag: **26.01.2001**

(54) **Turbinendurchflussmesser mit adaptiver Abtastfrequenz**

Turbine flow meter with adaptive sample frequency

Débitmètre à turbine avec fréquence d'échantillonnage adaptable

(84) Benannte Vertragsstaaten:
**AT CH DE LI**

(30) Priorität: **30.08.2000 DE 10042848**

(43) Veröffentlichungstag der Anmeldung:
**27.03.2002 Patentblatt 2002/13**

(73) Patentinhaber: **Techem Energy Services GmbH 65760 Eschborn (DE)**

(72) Erfinder: **Simon, Winfried 64579 Gernsheim (DE)**

(74) Vertreter: **Keil & Schaafhausen Patent- und Rechtsanwälte PartGmbB Friedrichstrasse 2-6 60323 Frankfurt am Main (DE)**

(56) Entgegenhaltungen:
**EP-A- 0 898 152**

**Beschreibung**

Die vorliegende Erfindung betrifft ein Verfahren zur Volumenmessung eines strömenden Mediums gemäß Anspruch 1, bei dem die Strömungsbewegung des Mediums in eine Rotationsbewegung eines in einem Volumenmessgerät angeordneten Bewegungsmessers, bspw. einem Flügelrad oder dgl. Volumenmessteil, umgesetzt wird und bei dem die Umdrehungen des Bewegungsmessers bspw. durch induktive oder kapazitive Abtastung elektronisch bestimmt werden, indem ein elektrisches Signal des Bewegungsmessers abgetastet wird, das nach einer vollen Umdrehung oder einem festgelegten Bruchteil einer vollen Umdrehung einen Wechsel in der Signalhöhe aufweist, wobei aus der Anzahl der Wechsel in der Signalhöhe ein Wert für den Durchfluss des Mediums durch das Volumenmessgerät ermittelt wird. Ferner wird ein Volumenmessgerät zur Durchführung des Verfahrens beschrieben.

Volumenmessgeräte mit Flügelrädern oder dgl. Volumenmessteilen werden heute oft mit einer berührungs- und kräftefreien Abtastung ausgestattet. Gegenüber der klassischen Ausrüstung von Flügelradzählern mit Magnetkupplung und mechanischem Rollenzählwerk hat diese Technik die wesentlichen Vorteile, dass die fehlende Reibung zu einem sehr guten Anlauf-Verhalten auch bei einem nur geringen Durchfluss von wenigen Litern je Sekunde führt und dass magnetische Partikel im Rohrnetz von dem Magneten nicht festgehalten werden und somit den Zähler nicht blockieren können.

Nachdem es vor einigen Jahren verschiedene Ansätze zur Abtastung von Flügelradzählern gab, hat sich zwischenzeitlich eine induktive Abtastung weitgehend durchgesetzt und ist bspw. in der DE 197 25 806 A1 beschrieben. Hier wird die Dämpfung eines Schwingkreises ausgewertet und damit die Position des Flügelrades festgestellt. Auf dem im Wasser befindlichen Flügelrad wird dazu eine halbseitig metallisierte Scheibe aufgebracht. In dem trockenen Teil des Zählers befinden sich eine oder mehrere Spulen, die mit einem Kondensator zu einem Schwingkreis abgeschlossen sind. Der Schwingkreis wird angeregt und anschließend die Zeit oder die Anzahl der Schwingungen, bis der Spannungspegel unter einen definierten Grenzwert gesunken ist, ausgewertet. Ist diese Zeit kurz, so befindet sich Metall im Magnetfeld; ist diese Zeit lang, so findet keine äußere Dämpfung des Schwingkreises statt. Auf diese Weise wird die aktuelle Position des Flügelrades erfasst. Diese induktive Lösung ist kostengünstig, einigermaßen stromsparend, robust gegenüber Verschmutzungen und wird für Wärmezähler oder auch für elektronische Wasserzähler eingesetzt. In der deutschen Patentanmeldung 199 32 041.1 der Anmelderin wird eine vergleichbare kapazitive Abtastung eines Bewegungsmessers beschrieben.

In der DE 39 23 398 A1 wird ein Umdrehungsdetektor mit unterschiedlichen Dämpfungsbereichen beschrieben, der ebenfalls induktiv abgetastet wird. Aus dem Über- oder Unterschreiten einer Diskriminatorschwelle wird die Position des Umdrehungsdetektors ermittelt, wobei ein Verfahren angegeben wird, um eine optimale Entscheidungsschwelle zu erhalten, das u.a. von alterungs- und temperaturbedingten Veränderungen der elektronischen Bauteile unabhängig ist. Ferner wird beschrieben, wie die Signale auch zur Drehrichtungserkennung und Unterdrückung von Pendelbewegungen ausgewertet werden können.

In der DE 295 11 030 U1 wird ein kostengünstiger und platzsparender Aufbau eines Volumenmessgerätes beschrieben.

Aus der gattungsgemäßen EP 0 898 152 A1 ist ein Verfahren zur Steuerung der Abtastfrequenz eines Flügelrades in einem Durchflussmesser bekannt, bei dem die Abtastfrequenz abgesenkt wird, wenn sich das Flügelrad nicht dreht, und wieder auf den Maximalwert erhöht wird, wenn das Flügelrad die Bewegung wieder aufnimmt. Ferner kann die Abtastfrequenz entsprechend der Drehzahl des Flügelrads gesteuert werden, wobei die Abtastfrequenz etwa der vierfachen Drehzahl des Flügelrades entsprechend gewählt wird.

Die bekannten Volumenmessgeräte decken im Durchfluss einen weiten Dyna mikbereich von etwa 3 bis zu 3000 Litern pro Stunde ab. Deswegen müssen elektronisch abgetastete Bewegungsmesser so schnell abgetastet werden, dass die maximal denkbare Drehzahl noch sicher erfasst werden kann. Ein Flügelrad dreht typischerweise bis zu 50 Hz schnell. Dies erfordert recht häufiges Abtasten mit z.B. 512 Hz, wenn auch Viertel-Umdrehungen zur Vor-Rückwärtserkennung sicher nachgewiesen werden sollen. In der Summe führt dies zu einer hochspezialisierten Elektronik (ASIC) und/oder zu einem beträchtlichen Stromverbrauch für Standard-Mikroprozessoren. Daher sind die bekannten Volumenmessgeräte nur schlecht für batteriebetriebenen Wärme- oder Wasserzähler geeignet.

Aufgabe der vorliegenden Erfindung ist es daher, eine zuverlässige Volumenmessung mit verringertem Stromverbrauch vorzuschlagen.

Diese Aufgabe wird bei dem Verfahren der Eingangs genannten Art mit den Merkmalen des Anspruchs 1 gelöst. Dabei wird die Abtastrate an die jeweils bestimmte Drehzahl des Bewegungsmessers angepasst. Im Gegensatz zu Volumenmessgeräten mit konstanter Abtastrate, die dann auf den maximalen Durchfluss ausgelegt sein muss, kann durch die Anpassung der Abtastrate an den tatsächlichen Durchfluss die Anzahl der Abtastmessungen insbesondere bei mittlerem und niedrigem Durchfluss erheblich reduziert werden, ohne dass relevante Informationen über das abgetastete Signal verloren gehen. Da für jede Abtastmessung eine bestimmte Strommenge benötigt wird, kann durch dieses Verfahren der Stromverbrauch bei der Volumenmessung deutlich verringert werden.

Dazu wird die Abtastrate erfindungsgemäß durch eine hochfrequente Abtastung des elektrischen Signals des Bewegungsmessers ermittelt, indem die kürzeste Dauer zwischen zwei Wechseln in der Signalhöhe (Periodendauer) bestimmt und die Abtastrate so festgelegt wird, dass der zeitliche Abstand zwischen zwei Abtastmessungen (Abtastzyklus) höchstens der halben Periodendauer entspricht. Somit finden zwischen zwei Wechseln in der Signalhöhe im Mittel zwei Abtastmessungen statt. Dies ist ausreichend, um die Wechsel in der Signalhöhe zuverlässig nachweisen zu können. Besonders vorteilhaft ist es, wenn der Aufbau des Bewegungsmessers so gewählt wird, dass die Periodendauer des elektrischen Signals des Bewegungsmessers bei gleichbleibendem Fluss konstant ist.

Zur weiteren Einsparung von Abtastmessungen wird bei der hochfrequenten Abtastung des elektrischen Signals mit der maximalen als hoher Abtastfrequenz begonnen und die Zeit zwischen einer und der nächsten Abtastmessung (Abtastzyklus) jeweils verlängert, bis ein Wechsel in der Signalhöhe festgestellt wird.

Erfindungsgemäß ist dabei vorgesehen, dass die Dauer des verlängerten Abtastzyklus kleiner ist als die Summe der beiden vorhergehenden Abtastzyklen, um noch eine ausreichend genaue Bestimmung der Länge der Periodendauer des elektrischen Signals des Bewegungsmessers zu erreichen. Es hat sich als vorteilhaft erwiesen, den Abtastzyklus jeweils um etwa 30 Prozent zu verlängern. Damit wird einerseits noch eine genaue Bestimmung der Periodendauer erreicht und andererseits eine Flankenunsicherheit, die sowohl von der Anordnung im Volumenmessgerät als auch von den elektronischen Bauteilen herrühren kann, berücksichtigt.

Um Zufallsschwankungen zu vermeiden, wird die Ermittlung der Abtastrate mehrmals unmittelbar aufeinanderfolgend durchgeführt. Aus den jeweils bestimmten Periodendauern kann dann ein Mittelwert gebildet werden. Damit können Ungenauigkeiten in der Bestimmung der Periodendauer verringert werden. Außerdem mitteln sich kleine, zufällig bedingte Schwankungen der Periodendauer heraus. Dabei kann die optimale Abtastrate um so genauer bestimmt werden, je öfter eine einzelne Ermittlung der Abtastrate wiederholt wird. Gegen zu häufiges Wiederholen spricht jedoch der erhöhte Messaufwand, der sich in einem höheren Stromverbrauch niederschlägt.

Nach der Anpassung der Abtastrate wird der Durchfluss des Mediums durch Zählen der Wechsel in der Signalhöhe bestimmt, wobei auch die während der Anpassung der Abtastrate festgestellten Wechsel in der Signalhöhe mitgezählt werden. Dadurch wird jede Umdrehung des Bewegungsmessers erfasst, so dass sich aus dem bekannten Wert für den Durchfluss durch das Volumenmessgerät bei einer Umdrehung direkt das durchflossene Gesamtvolumen bestimmen lässt (Volumenzählung).

Um Veränderungen in der Strömungsgeschwindigkeit des Mediums zu erfassen, wird nach einer vorgegebenen Zykluszeit eine erneute Anpassung der Abtastrate durchgeführt.

Zur weiteren Reduzierung von einzelnen Abtastmessungen wird bei einer besonders vorteilhaften Ausgestaltung des erfindungsgemäßen Verfahrens die Zählung der Wechsel in der Signalhöhe innerhalb einer Zykluszeit abgebrochen, wenn eine vorgegebene Anzahl von Wechseln festgestellt worden ist, wobei aus der Messzeit und der Anzahl der Wechsel das Volumen pro Zeit (Durchfluss) ermittelt und über die Zykluszeit diskret aufintegriert wird (zyklische Durchflussmessung). Ein derartiges Vorgehen bietet sich insbesondere bei Heizungsanlagen oder vergleichbaren Anlagen an, die mit einem konstanten oder nur langsam veränderlichen Durchfluss betrieben werden. Nach Ablauf der Zykluszeit wird eine erneute Anpassung der Abtastrate einschließlich nachfolgender zyklischer Durchflussmessung durchgeführt.

Ein Abbrechen der Zählung ist nur bei einem ausreichend hohen Durchfluss des Mediums sinnvoll. Zum einen ist dann die Reduzierung der einzelnen Abtastmessungen am größten. Zum anderen treten bei niedrigem Durchfluss stärkere Strömungsschwankungen auf, so dass es sinnvoll ist, tatsächlich jede Umdrehung des Bewegungsmessers zur genauen Volumenzählung zu erfassen. Daher wird erfindungsgemäß vorgeschlagen, dass die Zählung der Wechsel in der Signalhöhe nur abgebrochen wird, wenn eine untere Abtast-Frequenzschwelle überschritten wird.

Um bei der zyklischen Durchflussmessung eine hinreichend genaue Messzeit bestimmen zu können und den systematischen Einfluss von Fehlern aufgrund eines Offsets in der Phasenlage beim Abtasten des elektrischen Signals zu reduzieren, wird in der ersten und der letzten gemessenen Periodendauer des abgetasteten elektrischen Signals des Bewegungsmessers eine Abtastung mit hoher Abtastrate durchgeführt. Damit liegen am Anfang und Ende der Messzeit genaue Phaseninformationen vor, so dass die Dauer der Messzeit von Flanke zu Flanke des elektrischen Signals genau bestimmt werden kann.

Zur weiteren Reduzierung von systematischen Fehlereinflüssen kann erfindungsgemäß vorgesehen werden, dass nur Flanken in eine Richtung, d.h. von niedriger zu hoher Signalhöhe oder umgekehrt, ausgewertet werden. Dadurch werden systematische Verschiebungen in der Phasenlage durch einen möglicherweise nicht vollständig symmetrischen Aufbau des Volumenmessgerätes oder durch elektronische Einflüsse vermieden.

Zusätzlich kann durch Einlegen einer pseudozufälligen Pause nach der Ermittlung der Abtastrate ein systematischer Einfluss durch einen Offset in der Phasenlage vermieden werden, wobei die Länge der Pause zwischen Null und dem ermittelten Abtastzyklus variieren kann.

Um weitere Abtastmessungen und damit Strom zu sparen, können bei einer zyklischen Durchflussmessung erfindungsgemäß nur vollständige Umdrehungen des Bewegungsmessers abgetastet werden.

Ferner kann bei niedrigen Abtastraten unterhalb einer Abtast-Frequenzschwelle eine Drehrichtungserkennung bei jedem Wechsel der Signalhöhe durchgeführt werden. Bei niedrigen Strömen des Mediums besteht die Gefahr, dass sich die Strömungsrichtung umkehrt. Darüber hinaus treten insbesondere bei Strömungsstillstand verstärkt Pendelbewegungen des Bewegungsmessers auf, bei denen der Bewegungsmesser hin- und herdreht. Ohne eine Drehrichtungserkennung würden sowohl eine Umkehr der Strömungsrichtung als auch die Pendelbewegungen zu Fehlmessungen des durchflossenen Volumens führen.

Da die zuvor beschriebenen Phänomene bei hohen Strömen des Mediums kaum auftreten, ist es ausreichend, eine Drehrichtungserkennung bei hohen Abtastraten oberhalb einer Abtast-Frequenzschwelle nur in Zeitintervallen stattfindet, die ein Vielfaches der Zykluszeit sind.

Ferner betrifft die Erfindung ein Volumenmessgerät zur Messung der Durchflussmenge eines strömenden Mediums mit einem in einem definierten Volumen angeordneten Bewegungsmesser zur Umsetzung der Strömungsbewegung des Mediums in eine Rotationsbewegung, bspw. einem Flügelrad oder dgl. Volumenmessteil, an dessen Drehachse mindestens ein Körper zur abschnittsweisen elektrischen Beeinflussung einer bspw. induktiven oder kapazitiven Abtastelektronik vorgesehen ist, und einem Mikroprozessor zur Auswertung der abgetasteten Signale des Bewegungsmessers und zur Berechnung des Durchflusses, wobei in dem Mikroprozessor ein Programm zur Durchführung des zuvor beschriebenen Verfahrens implementiert ist.

In einer bevorzugten Ausgestaltung weisen alle Abschnitte des Körpers zur Beeinflussung der Abtastelektronik dieselbe Größe auf. Dies führt dazu, dass bei konstanter Rotationsgeschwindigkeit der Bewegungsmessers, d.h. konstantem Durchfluss des strömenden Mediums, die Periodendauer des elektrischen Signals des Bewegungsmessers gleich lang ist.

Zur Realisierung einer Drehrichtungserkennung sind an dem Körper zur Beeinflussung der Abtastelektronik mindestens drei Abschnitte vorgesehen, die die Abtasteiektronik unterschiedlich beeinflussen. Dadurch ist die Änderung in der Signalhöhe für jeden Übergang von einem zum nächsten Abschnitt des Körpers verschieden, so dass jeder Übergang genau zugeordnet werden kann. Alternativ können auch drei jeweils um 90° zueinander versetzte Abtastsensoren eingesetzt werden. Bei einem halbseitig beschichteten Körper, bzw. einer Modulatorscheibe, ergeben sich pro Umdrehung vier Zustandsänderungen der Sensorik (Viertelumdrehungsmodus). In dieser Anordnung kann man bspw. für Prüfzwecke (Kalibrierung, Eichung) schon kleine Volumina hochauflösend messen und die Drehrichtung bestimmen. Bei nur zwei um 90° versetzten Sensoren kann die Drehrichtung über die Reihenfolge der ansprechenden Sensoren erfasst werden. Mit Hilfe der Drehrichtungserkennung lassen sich Pendelbewegungen des Bewegungsmessers im strömungslosen Zustand erkennen. Ferner kann festgestellt werden, wenn der Volumenmesszähler falsch herum eingebaut worden ist und bei der Rückwärtsdrehung des Flügelrades falsch zählt. Im laufenden Betrieb ist dagegen die Drehrichtungserkennung nicht von Bedeutung. Man kann daher zwei von drei Sensoren abschalten und nur noch mit einem Sensor messen. Das spart Strom.

Nachfolgend wird eine Ausführungsform des erfindungsgemäßen Verfahrens mit Bezug auf die Zeichnung näher erläutert.

Es zeigen:

Fig. 1    ein Diagramm mit der Arbeitsweise des erfindungsgemäßen Verfahrens bei einer ersten Durchflussmenge und dem relativen Fehler bei der Bestimmung der Durchflusses;

Fig. 2    ein Diagramm mit der Arbeitsweise des erfindungsgemäßen Verfahrens bei maximaler Durchflussmenge und dem relativen Fehler bei der Bestimmung der Durchflusses;

Fig. 3    ein Diagramm mit der Arbeitsweise des erfindungsgemäßen Verfahrens mit einer zu kleinen Abtastrate und den Auswirkungen auf den relativen Fehler bei der Bestimmung der Durchflusses und

Fig. 4    ein Diagramm mit der Arbeitsweise des erfindungsgemäßen Verfahrens bei einem 30%-igen Jitter in den Flanken des elektrischen Signals des Bewegungsmessers und dem relativen Fehler bei der Bestimmung des Durchflusses.

In der Praxis, bspw. bei Wärmezählern einer Heizungsanlage, ist der Durchfluss des strömenden Mediums durch ein Volumenmessgerät häufig konstant. Optimaler Weise liegt der Durchfluss dann im Nennwertbereich des Volumenmessgerätes. Der Nennwertbereich definiert den maximalen kontinuierlichen Durchfluss, der lebenslang anliegen darf. Für typische Volumenmessgeräte liegt der Nennwert je nach Anwendung zwischen 600 und 1500 l/h. Der minimale Durchfluss gibt die unter Grenze für den Durchfluss, ab dem ein bestimmter Fehler eingehalten werden kann. Der maximale Durchfluss gibt einen Wert für kurzzeitige Spitzenbelastungen des Zählers. Im Anlaufbereich beginnt das Volumenmessgerät mit der Zählung und der Fehler ist hier unverhältnismäßig groß.

Der Durchfluss durch das Volumenmessgerät wird in eine Drehbewegung eines Flügelrades oder dgl. Volumenmessteil umgesetzt, so dass die Umdrehungen des Flügelrades ein Maß für den Durchfluss durch das Volumenmessgerät sind. Zur Bestimmung des Durchflusses werden die Umdrehungen des Flügelrades mit einer bekannten induktiven oder kapazitiven Abtastung ermittelt. Bei gebräuchlichen Volumenmessgeräten liegt die Drehzahl des Flügelrades bei maximalem Durchfluss etwa bei 50 Hz. Dieser obere Grenzwert ist relativ unabhängig von dem jeweiligen Nennwert.

Nachfolgend sind der Durchfluss des strömenden Mediums und die dazugehörige Drehzahl für einen typischen Wärmezähler mit einem Nennwert von 1500 l/h angegeben:

|  | Durchfluss | Drehzahl |
|---|---|---|
| Anlaufbereich : | 3 l/h | 0,05 Hz |
| minimaler Durchfluss : | 15 l/h | 0,25 Hz |
| Nennwert : | 1500 l/h | 25 Hz |
| maximaler Durchfluss : | 3000 l/h | 50 Hz |

Der Inhalt des Volumenbechers, d.h. das bei einer Umdrehung des Flügelrades maximal durchfließende Volumen, beträgt hier

$$3000 \text{ l/h} * 1/3600 \text{ h/s} * 1/50 \text{ s} = 0{,}017 \text{ l}.$$

Bisher wurde ein Flügelrad in einem typischen Volumenmessgerät stetig mit 512 Hz, die aus einem Uhrenquarz abgeleitet werden, abgetastet. Diese Abtastrate zwischen zwei aufeinanderfolgenden Abtastmessungen deckt mit hoher Sicherheit den gesamten Dynamikbereich ab und erlaubt auch das Abtasten von bspw. Viertel-Drehungen des Flügelrades zur Drehrichtungserkennung.

Bei dem vorliegenden Verfahren zur Volumenmessung wird die Abtastrate als adaptive Abtastrate der aktuellen Flügeldrehzahl angepasst. Dadurch bleibt der Informationsgewinn für jede Durchflussmessung, bei der das Signal des Flügelrades auf Änderungen in der Signalhöhe abgetastet wird, unabhängig von der Drehzahl des Flügelrades. Ferner ist der Volumenstrom bei typischen Anwendungen, bspw. einer Heizungsanlage, insbesondere bei hohen Durchflüssen normalerweise recht konstant oder nur langsam veränderlich. Die Veränderungen innerhalb von bspw. 2s sind vernachlässigbar. Daher muss der Durchfluss nur relativ selten erfasst werden, um aus dem Durchfluss pro Zeitintervall korrekt auf das durchgeströmte Volumen zu schließen. Es muss also nicht jede Umdrehung des Flügelrades abgetastet werden.

Daher wird zunächst grob die gerade sinnvolle Abtastrate bestimmt. Daraus kann in etwa auf den vorliegenden Durchfluss geschlossen werden.

Wenn der Durchfluss (und damit die bestimmte Abtastrate) groß genug ist, wird eine zyklische Durchflussmessung ausgeführt, d.h. eine Abtastung des Flügelrades geschieht nur während einer kurzen Zeitspanne und aus der Messung wird die Frequenz des Signals des Volumenmessteils bestimmt. Die Frequenz gibt dann das Volumen pro Sekunde an, das zeitdiskret aufintegriert wird. Diese zyklische Durchflussmessung mit vorangehender Bestimmung der Abtastrate wird regelmäßig, bspw. mit einer Zykluszeit von 2s, wiederholt.

Bei geringem Durchfluss kann wie üblich jede Umdrehung kontinuierlich abgetastet werden. Dadurch wird quasi eine Volumenzählung durchgeführt, da das durchgeströmte Volumen pro Umdrehung des Flügelrades bekannt ist.

Nachfolgend wird das Verfahren zur Volumenmessung noch einmal im Detail für ein konkretes Volumenmessgerät beschrieben.

Zunächst wird eine sinnvolle Abtastrate bestimmt. Dazu werden zwei Abtastmessungen, bei denen zur Feststellung der Flügelradposition bspw. alle vorhandenen Sensoren abgetastet werden und ein logischer Zustand festgestellt wird, in einem vergleichsweise kurzen Abstand von ca. 7 ms (Abtastrate ca. 142 Hz) gestartet. Nach jeder Abtastmessung wird der Abtastzyklus, d.h. der Abstand zwischen den einzelnen Abtastmessungen, solange um etwa 30 % verlängert (7, 9, 12, 15, 20 ms, ...), bis sich bei einer Abtastmessung ein Wechsel in der Signalhöhe des elektrischen Signals des Flügelrades ergibt. Der Verlängerungsfaktor von ca. 1,3 ergibt sich zum einen aus der Forderung, dass die nachfolgende Abtastperiode (Abtastzyklus, 12 ms) kleiner sein muss als die Summe der beiden vorhergehenden (7 und 9 ms). Zum anderen muss eine Flankenunsicherheit (Jitter) der Anordnung berücksichtigt werden.

Derartige Flankenunsicherheiten (Jitter oder Phasenrauschen) im elektrischen Signal des Flügelrades können auf zufällige Fluktuationen im Durchfluss des Mediums, bspw. durch Druckschläge oder ähnliche Störungen im hydraulischen System, oder in der Elektronik zurückzuführen sein.

Dieser Abtastvorgang wird wiederholt, bis sich erneut ein Wechsel in der Signalhöhe ergibt. Die bei den Wiederholungen ermittelten Zeiten werden gemittelt und daraus auf die Periodendauer des anliegenden elektrischen Signals geschlossen. Anschließend wird der zeitliche Abstand zwischen zwei Abtastmessungen etwa auf die halbe Periodendauer festgelegt. Wegen der Flankenunsicherheiten wird man in der Praxis etwa um das 1,4-fache schneller abtasten. Die Abtastrate kann um so genauer bestimmt werden, je öfter der Vorgang wiederholt wird. Gegen zu häufiges Wiederholen spricht der erhöhte Messaufwand und der damit verbundene Stromverbrauch. Nach Abtastung von 3 bis 4 Wechseln in der Signalhöhe des elektrischen Signals des Flügelrades (Halbwellen) kann die sinnvolle Abtastrate genau genug bestimmt werden.

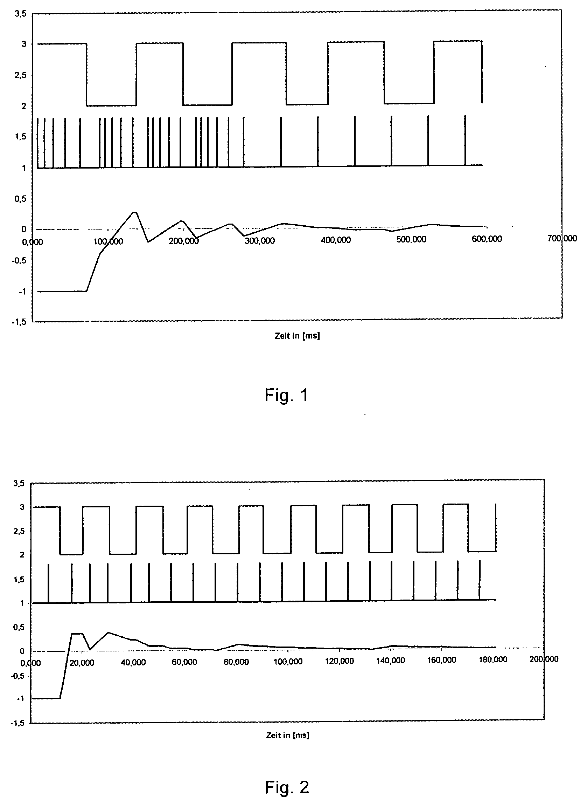

In den Fig. 1 bis 4 ist jeweils die Ermittlung der Abtastrate und der Anfang der nachfolgenden Durchflussmessung mit einer bestimmten Abtastrate für verschiedene Szenarien dargestellt.

Fig. 1 zeigt die Ermittlung der Abtastrate bei 15% des maximalen Durchflusses. Die obere Kurve zeigt den kastenförmigen Verlauf des elektrischen Signals des Flügelrades, das in ein logisches Signal (Wert 0 oder 1) umgesetzt wurde, als Funktion der Zeit. Jeder Wechsel zwischen 0 und 1 (respektive 2 und 3 auf der Ordinate) entspricht einem Wechsel in der Signalhöhe des elektrischen Signals. Die unter der oberen Kurve vertikal dargestellten Linien zeigen jeweils eigenständige Abtastmessungen an. Zu Beginn des Zeitstrahls wächst der Abstand zwischen zwei Abtastmessungen stetig an, bis ein Wechsel in der Signalhöhe des elektrischen Signals festgestellt wird. Dieser Messrhythmus wiederholt sich insgesamt 4 Mal. Dabei wird die sinnvolle Abtastrate ermittelt, wobei der Abstand zwischen zwei Abtastmessungen etwa der halben Periodendauer des elektrischen Signals entspricht. Anschließend wird mit dieser konstanten Abtastrate weitergemessen, um den Durchfluss des Mediums zu bestimmen. Dabei wird die Anzahl der Wechsel in der Signalhöhe des elektrischen Signals gezählt. Die untere Kurve zeigt den relativen Fehler der Durchflussmessung, der während der Bestimmung der sinnvollen Abtastrate zwischen vergleichsweise großen Werten schwankt und im Laufe der Zeit vernachlässigbar klein wird.

Fig. 2 zeigt die Anwendung des Verfahrens bei maximaler Durchflussrate. Aufgrund der kurzen Periodendauer des elektrischen Signals kann hier im Gegensatz zu Fig. 1 die optimale Abtastrate nicht erheblich vermindert werden.

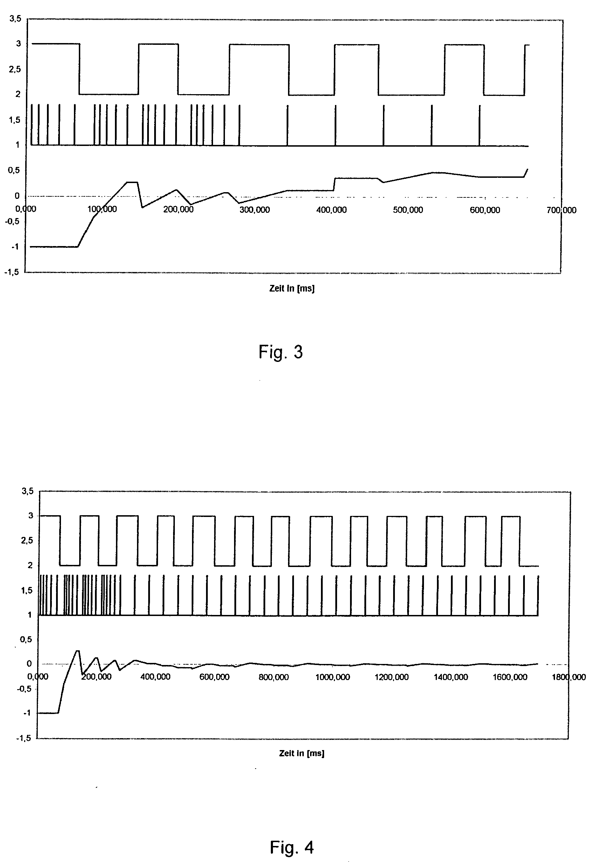

In Fig. 3 ist ein Fall dargestellt, in dem die Abtastrate zu klein gewählt ist. Dann findet eine Unter-Abtastung statt und der relative Fehler wird mit der Zeit größer. Dieser Fall wird in der Praxis durch die oben beschriebene zuverlässige Bestimmung der sinnvollen Abtastrate vermieden.

Wie Fig. 4 zu entnehmen, ist das Verfahren trotz eines 30%-igen Jitters in den Flanken des elektrischen Signals, der sich in Schwankungen der Periodendauer des dargestellten logischen Signals zeigt, zuverlässig anwendbar. Die Abtastfrequenz wird durch Berücksichtigung eines pauschalen Sicherheitsfaktors an die kürzere Periodendauer angepasst und hinreichend genau bestimmt, wie der vernachlässigbare Fehler zeigt.

Nach der Ermittlung der Abtastrate wird der Durchfluss durch Zählung der Wechsel in der Signalhöhe bestimmt. Die Abtastung ist immer dann sicher, wenn mindestens mit der doppelten Signalfrequenz abgetastet wird.

Die Zählung der Wechsel in der Signalhöhe wird abgebrochen, wenn 50 Wechsel festgestellt wurden. Der Durchfluss wird aus der Anzahl der Umdrehungen und der verstrichenen Zeit berechnet:

$$Q = 50 * \text{Inhalt des Volumenmessbechers} / \text{Messzeit}$$

und dann zeitdiskret aufintegriert (zyklische Durchflussmessung).

Wenn innerhalb der Zyklusmesszeit die vorgegebenen Änderungen nicht erreicht werden, wird jede Umdrehung gezählt und daraus das durchflossene Volumen bestimmt (Volumenzählung).

Nach Ablauf einer vorgegebenen Zykluszeit von 2s wird das gesamte Verfahren wiederholt.

Es kann eine untere Abtast-Frequenzschwelle, bspw. 20 Hz, für die Durchführung der zyklischen Durchflussmessung definiert werden, da bei niedrigeren Abtastraten eine weitere Einsparung von einzelnen Abtastmessungen kaum noch etwas bringt. Unterhalb dieser Abtast-Frequenzschwelle wird die sinnvolle Abtastrate asynchron und unabhängig von der Zählung bestimmt, d.h. ohne die laufende Zählung zu unterbrechen.

Bei der zyklischen Durchflussmessung können statt Viertel-Umdrehungen auch nur vollständige Umdrehungen ausgewertet werden. Dies spart weitere Abtastmessungen und damit Strom. Auf eine Drehrichtungserkennung kann bei hohen Durchflüssen verzichtet werden, da sich diese nicht plötzlich umkehren. Auch Pendelbewegungen, d.h. ein Hin- und Herschwingen des Flügelrades, sind unwahrscheinlich und drücken sich eher in Flankenunsicherheiten (Phasenrauschen oder Jitter) aus. Es genügt, wenn die Drehrichtung nur von Zeit zu Zeit, bspw. alle 10s, gemessen wird. Pendelbewegungen müssen nur bei niedrigen Durchflüssen bei der Volumenzählung festgestellt werden.

Um die Messzeit bei der zyklischen Durchflussmessung genauer bestimmen zu können, kann auch die Phaseninformation durch Übertastung im ersten und letzten Puls (gemessene Periodendauer des elektrischen Signals) ausgewertet werden. Damit ließen sich auch weitere Abtastmessungen auf Kosten der Messzeit einsparen. Grenzen für diese Verbesserung ergeben sich durch das in der Anordnung auftauchende Phasenrauschen. Zur Auswertung kommen vorzugsweise nur Flanken in einer Richtung, da die Flankenunsicherheit (Jitter, Phasenrauschen) dann kleiner ist und Abweichungen im mechanischen Aufbau und andere Unsymmetrien geringere Auswirkungen haben.

Durch die Bestimmung der optimalen Abtastrate ist die Phasenlage am Anfang der Durchflussmessung mit konstanter Abtastrate festgelegt. Bei gegebener Signalfrequenz und Abtastrate sowie kurzen Messzeiten wird der Messfehler systematisch neben dem richtigen Wert liegen. Das Messergebnis ist dann nicht stochastisch verteilt, so dass der Summenfehler statt gegen Null zu konvergieren immer größer würde. Durch Einführung einer pseudozufälligen Pause im Bereich von 0 bis zu der jeweils optimierten Abtastrate wird dieser Effekt vermieden.

Die klassische Methode der Abtastung (Volumenzählung) birgt keine durch die Abtastung bedingten Messfehler in sich, da jede Umdrehung des Flügelrades gezählt und ausgewertet wird.

Bei der zyklischen Durchflussmessung kann sich die Messunsicherheit aufgrund der begrenzten Anzahl der Messungen erhöhen. Hierbei entsteht ein stochastischer Fehler, wobei der Summenfehler durch viele Wiederholungen sehr klein wird und daher in der Praxis vernachlässigt werden kann. Für die Prüfung (Eichung, Beglaubigung) sind jedoch spezifische Prüfmodi erforderlich.

Ein weiterer Fehler kann durch das dynamische Verhalten der Anordnung entstehen, wenn sich der Durchfluss während der Zykluszeit verändert. Bei kleiner werdendem Durchfluss gibt es keine Probleme, da das Abtasttheorem sicher eingehalten wird. Wird der Durchfluss während der Zykluszeit aber erhöht, so können aufgrund einer Unter-Abtastung Wechsel in der Signalhöhe möglicherweise nicht festgestellt werden. Dieses unsymmetrische Verhalten führt zu einem ansteigenden Summenfehler. Allerdings wird dies aufgrund der Konstanz des Durchflusses in normalen Anwendungen nur selten vorkommen, so dass der Fehlereinfluss nur gering ist. Ferner könnte die gewählte Abtastfrequenz höher als die optimierte Abtastfrequenz gewählt werden, um kleine bis mittlere Änderungen noch aufzufangen. Eine weitere Möglichkeit zur Reduzierung dieses Fehlers ist eine Verkürzung der Zykluszeit.

Mit dem vorgeschlagenen Verfahren zur Volumenmessung eines strömenden Mediums in einem entsprechenden Volumenmessgerät kann die Anzahl der notwendigen Abtastmessungen erheblich reduziert werden. Je nach Randbedingungen kann die Anzahl und damit der Stromverbrauch schätzungsweise im Bereich von 1 zu 4 bis 1 zu 20 reduziert werden. Unter den beschriebenen Bedingungen werden die konventionell üblichen 512 Abtastschritte pro Sekunde durch das vorgeschlagene Verfahren auf maximal 50 Abtastschritte pro Sekunde reduziert. Dies entspricht einem Spar-Faktor von 10.

**Patentansprüche**

1. Verfahren zur Volumenmessung eines strömenden Mediums, bei dem die Strömungsbewegung des Mediums in eine Rotationsbewegung eines in einem Volumenmessgerät angeordneten Bewegungsmessers umgesetzt wird und bei dem die Umdrehungen des Bewegungsmessers elektronisch bestimmt werden, indem ein elektrisches Signal des Bewegungsmessers abgetastet wird, das nach einer vollen Umdrehung oder einem festgelegten Bruchteil einer vollen Umdrehung einen Wechsel in der Signalhöhe aufweist, wobei aus der Anzahl der Wechsel in der Signalhöhe ein Wert für den Durchfluss des Mediums durch das Volumenmessgerät ermittelt wird und die Abtastrate an die jeweils bestimmte Drehzahl des Bewegungsmessers angepasst wird,

   - indem die Abtastrate durch eine hochfrequente Abtastung des elektrischen Signals des Bewegungsmessers ermittelt wird, wobei bei der hochfrequenten Abtastung des elektrischen Signals mit der maximalen Abtastfrequenz begonnen wird und die als Abtastzyklus bezeichnete Zeit zwischen einer und der nächsten Abtastmessung jeweils verlängert wird, bis ein Wechsel in der Signalhöhe festgestellt wird, und
   - indem die als Periodendauer bezeichnete kürzeste Dauer zwischen zwei Wechseln in der Signalhöhe bestimmt und die Abtastrate so festgelegt wird, dass der zeitliche Abstand zwischen zwei Abtastmessungen höchstens der halben Periodendauer entspricht.

2. Verfahren nach Anspruch 1, **dadurch gekennzeichnet, dass** der verlängerte Abtastzyklus kleiner ist als die Summe der beiden vorhergehenden Abtastzyklen.

3. Verfahren nach einem der Ansprüche 1 bis 2, **dadurch gekennzeichnet, dass** die Ermittlung der Abtastrate mehrmals unmittelbar aufeinanderfolgend durchgeführt wird, bevor mit der konstanten Abtastrate weitergemessen wird.

4. Verfahren nach einem der vorhergehenden Ansprüche, **dadurch gekennzeichnet, dass** nach Anpassung der Abtastrate der Durchfluss durch Zählen der Wechsel in der Signalhöhe bestimmt wird, wobei auch die während der Anpassung der Abtastrate festgestellten Wechsel in der Signalhöhe mitgezählt werden.

5. Verfahren nach einem der vorhergehenden Ansprüche, **dadurch gekennzeichnet, dass** nach einer vorgegebenen Zykluszeit der Durchflussmessung nach vorangegangener Ermittlung der Abtastrate eine erneute Anpassung der Abtastrate durchgeführt wird.

6. Verfahren nach Anspruch 5, **dadurch gekennzeichnet, dass** die Zählung der Wechsel in der Signalhöhe innerhalb einer Zykluszeit abgebrochen wird, wenn eine vorgegebene Anzahl von Wechseln festgestellt worden ist, wobei aus der Messzeit und der Anzahl der Wechsel der Durchfluss des Mediums ermittelt und über die Zykluszeit diskret als Volumen aufaddiert wird.

7. Verfahren nach Anspruch 6, **dadurch gekennzeichnet, dass** die Zählung der Wechsel in der Signalhöhe nur abgebrochen wird, wenn eine untere AbtastFrequenzschwelle überschritten wird.

8. Verfahren nach Anspruch 6 oder 7, **dadurch gekennzeichnet, dass** in der ersten und der letzten gemessenen Periodendauer des abgetasteten elektrischen Signals des Bewegungsmessers zur Phaseninformation eine Abtastung mit maximaler Abtastfrequenz durchgeführt wird.

9. Verfahren nach Anspruch 8, **dadurch gekennzeichnet, dass** nur Flanken des elektrischen Signals in eine Richtung des Wechsels des Signalhöhe ausgewertet werden.

10. Verfahren nach einem der Ansprüche 6 bis 9, **dadurch gekennzeichnet, dass** nach der Ermittlung der Abtastrate eine pseudozufällige Pause eingelegt wird, deren Länge zwischen Null und dem ermittelten Abtastzyklus liegt.

11. Verfahren nach einem der Ansprüche 6 bis 10 **dadurch gekennzeichnet, dass** nur vollständige Umdrehungen des Bewegungsmessers abgetastet werden.

12. Verfahren nach einem der vorherigen Ansprüche, **dadurch gekennzeichnet, dass** eine Drehrichtungserkennung bei niedrigen Abtastraten unterhalb einer Abtast-Frequenzschwelle bei jedem Wechsel der Signalhöhe durchgeführt wird.

13. Verfahren nach einem der vorherigen Ansprüche, **dadurch gekennzeichnet, dass** eine Drehrichtungserkennung bei hohen Abtastfrequenzen oberhalb einer Abtast-Frequenzschwelle in Zeitintervallen stattfindet, die ein Vielfaches der Zykluszeit sind.

14. Volumenmessgerät zur Messung der Durchflussmenge eines strömenden Mediums mit einem in einem definierten Volumen angeordneten Bewegungsmesser zur Umsetzung der Strömungsbewegung des Mediums in eine Rotationsbewegung an dessen Drehachse mindestens ein Körper zur abschnittsweisen elektrischen Beeinflussung einer Abtastelektronik vorgesehen ist, und einem Mikroprozessor zur Auswertung der abgetasteten Signale des Bewegungsmessers und zur Berechnung des Durchflusses, wobei in dem Mikroprozessor ein Programm zur Durchführung eines Verfahrens nach einem der Ansprüche 1 bis 13 implementiert ist.

15. Volumenmessgerät nach Anspruch 14, **dadurch gekennzeichnet, dass** alle Abschnitte des Körpers zur Beeinflussung der Abtastelektronik dieselbe Größe aufweisen.

16. Volumenmessgerät nach Anspruch 14 oder 15, **dadurch gekennzeichnet, dass** mindestens zwei, vorzugsweise drei Abschnitte vorgesehen sind, die die Abtastelektronik unterschiedlich beeinflussen.

17. Volumenmessgerät nach Anspruch 14 oder 15, **dadurch gekennzeichnet, dass** zwei oder drei Abtastsensoren um 90° versetzt auf einer vorzugsweise halbseitig beschichteten Modulatorscheibe angeordnet sind.

**Claims**

1. Method for measuring the mass flow rate of a flowing medium, in which the flow motion of the medium is converted into a rotational motion of a motion sensor arranged in a volume measuring device and in which the revolutions of the motion sensor are determined electronically by an electrical signal of the motion sensor being sampled, which after a full revolution or a specified fraction of a full revolution exhibits a change in the signal level, wherein the number of changes in the signal level is used to calculate a value for the flow rate of the medium through the volume measuring device and the sample rate is adjusted to match the specific rotation rate of the motion sensor,

   - by the sample rate being determined by a high-frequency sampling of the electrical signal of the motion sensor, wherein the high-frequency sampling of the electrical signal is begun at the maximum sampling frequency and the time between each sample measurement and the next, designated as the sample cycle time, is lengthened until a change in the signal level is detected, and

- by the shortest duration between two changes in the signal level, designated as the period, being determined and the sampling rate being set such that the time interval between two sample measurements is no greater than half the period.

2. Method according to Claim 1,
**characterized in that**
the lengthened sample cycle is smaller than the sum of the two previous sample cycles.

3. Method according to any one of Claims 1 to 2,
**characterized in that**
the determination of the sampling rate is performed multiple times in direct succession, before further measurements are made at the constant sampling rate.

4. Method according to any one of the previous claims,
**characterized in that**
after matching of the sampling rate the flow rate is determined by counting the number of changes in the signal level, wherein the changes in the signal level detected during the matching of the sampling rate are also included in the count.

5. Method according to any one of the previous claims,
**characterized in that**
after a pre-specified cycle time of the flow rate measurement following the determination of the sampling rate, the matching of the sampling rate is repeated.

6. Method according to Claim 5,
**characterized in that**
the counting of the changes in the signal level within a cycle time is aborted if a pre-specified number of changes has been detected, wherein the flow rate of the medium is determined from the measurement time and the number of changes and is summed discretely over the cycle time to form a volume.

7. Method according to Claim 6,
**characterized in that**
the counting of the changes in the signal level is only aborted if a lower sampling frequency threshold is exceeded.

8. Method according to Claim 6 or 7,
**characterized in that**
in the first and the last measured period of the sampled electrical signal of the motion sensor a sampling is performed at the maximum sampling rate to provide phase information.

9. Method according to Claim 8,
**characterized in that**
only edges of the electric signal in the direction of the change in the signal level are evaluated.

10. Method according to any one of Claims 6 to 9,
**characterized in that**
after the determination of the sampling rate a pseudorandom pause is inserted, the length of which lies between zero and the calculated sample cycle.

11. Method according to any one of Claims 6 to 10,
**characterized in that**
only complete revolutions of the motion sensor are sampled.

12. Method according to any one of the previous claims,
**characterized in that**
a detection of rotation direction is carried out at low sampling rates below a sampling frequency threshold for each

9

EP 1 191 310 B1

change in the signal level.

13. Method according to any one of the previous claims,
**characterized in that**
a detection of rotation direction takes place at high sample rates above a sampling frequency threshold in time intervals that are a multiple of the cycle time.

14. Volume measuring device for measuring the mass flow rate of a flowing medium, with a motion sensor arranged in a defined volume for converting the flow motion of the medium into a rotational movement, on the axis of rotation of which at least one element is provided for electrically influencing a set of sampling electronics in sections, and with a microprocessor for evaluating the sampled signals of the motion sensor and for calculating the flow rate, wherein a program for carrying out a method according to any one of Claims 1 to 13 is implemented in the microprocessor.

15. Volume measuring device according to Claim 14,
**characterized in that**
all sections of the element for influencing the sampling electronics have the same size.

16. Volume measuring device according to Claim 14 or 15,
**characterized in that**
at least two, preferably three sections are provided, which influence the sampling electronics differently.

17. Volume measuring device according to Claim 14 or 15,
**characterized in that**
two or three sampling sensors offset by 90° are arranged on a modulator disk, which is preferably coated on one side.

**Revendications**

1. Procédé de mesure de volume d'un milieu s'écoulant, dans lequel le mouvement d'écoulement du milieu est converti en un mouvement de rotation d'un capteur de mouvements disposé dans un appareil de mesure de volume et dans lequel les rotations complètes du capteur de mouvements sont déterminées électroniquement, en échantillonnant un signal électrique du capteur de mouvement, qui présente après une rotation complète ou une fraction déterminée d'une rotation complète une variation dans le niveau de signal, dans lequel d'après la pluralité de variations dans le niveau du signal une valeur pour le débit du milieu est déterminée par l'appareil de mesure de volume et le taux d'échantillonnage est adapté à la vitesse de rotation déterminée respective du capteur de mouvements,

   - en déterminant le taux d'échantillonnage par un échantillonnage à haute fréquence de signal électrique du capteur de mouvement, dans lequel l'échantillonnage à haute fréquence du signal électrique est commencé avec la fréquence d'échantillonnage maximale et le temps désigné comme cycle d'échantillonnage entre une mesure d'échantillonnage et la mesure échantillonnage suivante es respectivement prolongé jusqu'à ce qu'une variation dans le niveau de signal soit déterminé, et
   - en désignant la durée la plus courte désignée comme durée de période entre deux variations dans le niveau de signal et en déterminant le taux d'échantillonnage de telle sorte que l'intervalle temporel entre deux mesures d'échantillonnage corresponde au maximum à la moitié de la durée de période.

2. Procédé selon la revendication 1, **caractérisé en ce que** le cycle d'échantillonnage prolongé est plus petit que la somme des deux cycles d'échantillonnage précédents.

3. Procédé selon une des revendications 1 à 2, **caractérisé en ce que** la détermination du taux d'échantillonnage est effectuée en plusieurs fois en séquence directe, avant que la mesure de taux d'échantillonnage constant soit poursuivie.

4. Procédé selon une des revendications précédentes, **caractérisé en ce que** après l'adaptation du taux d'échantillonnage le débit est déterminé en comptant les variations dans le niveau de signal, dans lequel les variations dans le niveau de signal déterminés pendant l'adaptation du taux d'échantillonnage sont aussi comptés conjointement.

5. Procédé selon une des revendications précédentes, **caractérisé en ce que** après un cycle temporel prescrit de mesure de débit suivant une détermination précédente du taux d'échantillonnage une nouvelle adaptation du taux d'échantillonnage est effectuée.

6. Procédé selon la revendication 5, **caractérisé en ce que** le comptage des variations dans le niveau de signal est interrompu à l'intérieur d'un cycle temporel, quand un nombre prescrit de variations a été déterminé, moyennant quoi la variation de débit du milieu est déterminé d'après le temps de mesure et le nombre de variations est additionné au temps de cycle discrètement comme volume.

7. Procédé selon la revendication 6, **caractérisé en ce que** le comptage des variations dans le niveau du signal est interrompu seulement quand un seuil de fréquence d'échantillonnage inférieur est sous dépassé.

8. Procédé selon la revendication 6 ou 7, **caractérisé en ce que** dans la première et la dernière durée de période mesurée du signal électrique échantillonné du capteur de mouvements un échantillonnage avec une fréquence d'échantillonnage maximale est effectué à des fins d'information de phase.

9. Procédé selon la revendication 8, **caractérisé en ce que** seuls les flancs du signal électrique sont évalués dans une direction de variation de niveau de signal.

10. Procédé selon une des revendications 6 à 9, **caractérisé en ce que** après la détermination du taux d'échantillonnage une pause pseudo aléatoire est marquée, dont la longueur est comprise entre zéro et le cycle d'échantillonnage déterminé.

11. Procédé selon une des revendications 6 à 10, **caractérisé en ce que** seules les rotations complètes du capteur de mouvements sont échantillonnées.

12. Procédé selon une des revendications précédentes, **caractérisé en ce que** une reconnaissance de direction de rotation en présence de taux d'échantillonnage bas inférieurs à un seuil de fréquence d'échantillonnage est déterminée à chaque variation de niveau de signal.

13. Procédé selon une des revendications précédentes, **caractérisé en ce que** une reconnaissance de direction de rotation en présence de fréquences d'échantillonnage élevées supérieures à un seuil de fréquence d'échantillonnage a lieu à des intervalles de temps, qui sont un multiple du temps de cycle.

14. Appareil de mesure de volume pour mesurer la quantité de débit d'un milieu s'écoulant avec un capteur de mouvements disposés dans un volume défini pour convertir le mouvement d'écoulement du milieu en un mouvement de rotation sur l'axe de rotation duquel au moins un corps pour influencer électriquement par portions une électronique d'échantillonnage est prévu ainsi qu'un microprocesseur pour évaluer les signaux échantillonnés du capteur de mouvements et pour calculer le débit, dans lequel dans le microprocesseur un programme pour mettre en oeuvre un procédé selon une des revendications 1 à 13 est implémenté.

15. Appareil de mesure de volume selon la revendication 14, **caractérisé en ce que** toutes les portions du corps pour influencer l'électronique d'échantillonnage présentent la même taille.

16. Appareil de mesure de volume selon la revendication 14 ou 15, **caractérisé en ce que** au moins deux, de préférence trois portions sont prévues, qui influencent différemment l'électronique d'échantillonnage.

17. Appareil de mesure de volume selon la revendication 14 ou 15, **caractérisé en ce que** deux ou trois capteurs d'échantillonnage sont décalés de 90° et sont disposés sur un disque de modulateur revêtu de préférence sur un demi-côté.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19725806 A1
- DE 19932041
- DE 3923398 A1
- DE 29511030 U1
- EP 0898152 A1